# EUROPÄISCHE PATENTSCHRIFT

(11) **EP 1 591 007 B1**
(45) Veröffentlichungstag und Bekanntmachung des Hinweises auf die Patenterteilung: **27.08.2008**
(21) Anmeldenummer: 05090087.7
(22) Anmeldetag: 04.04.2005
(51) Int. Cl.: A01G 25/09, E02F 3/88

(54) **Verfahren zur Restauration von Binnengewässern und dazu geeignete Anordnung**
Method for restauration of inland water and device therefor
Procédé et dispositif pour restauration des eaux intérieures

(30) Priorität: 02.04.2004 DE 102004017647
(43) Veröffentlichungstag der Anmeldung: 02.11.2005
(73) Patentinhaber: Rösing, Heiner, 18609 Binz (DE)
(72) Erfinder: Rösing, Heiner, 18609 Binz (DE)
(74) Vertreter: Schubert, Klemens

(56) Entgegenhaltungen:
- WO-A-03/010388
- DE-A1- 19 904 958
- DE-A1- 19 952 656
- GB-A- 2 149 633
- US-A- 5 211 511
- US-A- 5 447 274

## Beschreibung

Die Erfindung betrifft ein Verfahren zur Restauration von Binnengewässern. Sie bezieht sich insbesondere auf ein Verfahren zur Entnahme und Verbringung von Sediment aus den Binnengewässern. Gegenstand der Erfindung ist weiterhin eine zur Durchführung des Verfahrens geeignete Anordnung.

Eine Vielzahl von Binnengewässern ist mit organischen Nährstoffen überlastet. Dies betrifft vor allem flache Binnengewässer, in welche ein starker Nährstoffeintrag aus den umliegenden Einzugsgebieten und Gewässern erfolgt oder welche in den ufernahen Gebieten einen starken Pflanzenbewuchs, insbesondere einen umfangreichen Baumbestand, aufweisen. Der durch den Uferbewuchs bedingte Nährstoffeintrag steht in einem engen Zusammenhang mit den Vegetationsperioden, durch welche in hiesigen Breiten zum Jahresende beträchtliche Teile der Vegetation absterben und, sofern es sich dabei um die Teile ufernaher Vegetation handelt, in die Gewässer gelangen. Infolge des Verrottungsprozesses bilden sich dabei Schadstoffe, wie Phosphate und Stickstoff, die wiederum das Wachstum der Wasserpflanzen fördern. Durch das Überangebot von Nährstoffen, welche sich zu einem großen Teil in gelöster Form im Wasser des jeweiligen Gewässers befinden und sich darüber hinaus in konzentrierter Form auf dessen Grund ablagern, ist die in dem Gewässer lebende Fauna stark bedroht. Zudem ist in den ufernahen Bereichen flacher Gewässer eine zunehmende Verlandung zu verzeichnen.

Um diesen Prozessen entgegenzuwirken, insbesondere auch der Bedrohung der Fauna zu begegnen, welche im Extremfall bis zu deren Absterben führt, wird im Zuge systematischer Restaurationsarbeiten mit Nährstoffen übersättigtes Sediment aus den Gewässern entnommen. Das Sediment wird in Mächtigkeiten zwischen 0,5 und 1,0 m abgetragen und zusammen mit einem entsprechenden Wasseranteil aus dem Gewässer entnommen.

Nach den konventionellen Verfahren des Standes der Technik wird das entnommene Sediment zunächst im ufernahen Bereich gelagert und hier mechanisch vom mitentnommenen Wasser separiert. Das anfallende Wasser wird chemisch behandelt, um die Nährstoffe zu neutralisieren, und anschließend in das Gewässer zurückgeführt. Im Weiteren wird das Sediment getrocknet, dann in Fahrzeuge verladen und im Allgemeinen durch Straßentransport zu bestimmungsgemäßen Orten verbracht. Hier wird das Sediment in der Regel auf landwirtschaftlich genutzten Flächen ausgebracht.
Diese Vorgehensweise ist mit einem beträchtlichen Energieaufwand verbunden und führt im Hinblick auf den Transport des Sediments zu einer nicht unerheblichen Verkehrsbelastung. Für die Zwischenlagerung des Sediments beziehungsweise seine Trocknung sind größere Flächen erforderlich. Außerdem hat es sich gezeigt, dass die Zwischenlagerung des Sediments in den Uferbereichen zu einer erheblichen Verunreinigung dieser Bereiche führt und häufiger auch Teile des Sediments in das Gewässer zurückgelangen, indem sie beispielsweise durch einsetzenden Regen zurückgespült werden. Zudem erfolgt bei der Entnahme des Sediments mittels derzeit bekannter Verfahren mit zusätzlicher mechanischer Ablösung der Sedimentschicht vom Untergrund mit Hilfe rotierender oder anders gearteter Schneidvorrichtungen häufig eine ungewollte Vermengung des Entnahmebereichs mit Schwebstoffen und Phosphaten. Als nachteilig ist nicht zuletzt auch die chemische Behandlung sowohl des vom Sediment separierten Wassers als auch des Sediments selbst anzusehen, da dies zu einer starken Belastung der Ökosysteme führt.

Durch die US 5,211,511 A ist daher vorgeschlagen worden, aus einem Gewässer gefördertes Sediment zusammen mit dem dabei aufgenommenen Wasser ohne Zwischenlagerung über Rohre zu landwirtschaftlichen Nutzflächen zu transportieren und das breiige Gemisch dort mittels Hochdruckdüsen auszubringen. Die entsprechenden Düsen sind gemäß der Schrift als Auswerfereinheiten auf einer Mehrzahl schlittenähnlicher Geräte angeordnet, wobei das Sediment-Wasser-Gemisch den Auswerfereinheiten über von jeweils einer Haspel ablaufende Schläuche zugeführt werden. Die schlittenähnlichen Geräte werden unter gleichzeitigem Ausrollen der Schläuche auf eine Startposition verbracht und ausgehend von dieser unter Ausbringung des breiigen Gemisches über ein Ausbringungsarial bewegt, indem die Schläuche mittels der jeweiligen Haspel und einer mit dieser zusammenwirkenden, unter Ausnutzung des in dem Sediment-Wasser-Gemisch erzeugten Drucks getriebenen Winde aufgerollt beziehungsweise aufgewickelt werden. Der Aufbau der zur Bewegung der Schlitten beziehungsweise schlittenähnlichen Geräte erforderlichen Bewegungsmechanik ist jedoch, wie auch in der Schrift angemerkt wird, verhältnismäßig aufwendig. Ferner ist es erforderlich, die Schlitten auf einer möglichst geraden und orthogonal zur Drehachse der jeweiligen Haspel verlaufenden Bahm zu bewegen, um zu verbindern, dass sich des Schlauch beim Aufrollen des Haspel verklemmt. Dies kann im Falle einer unebenen beziehungsweise unwegsamen Ausbringungsfläche schwierig sein. Den lektgenannten Nachteil weist auch die aus der GB 2149633 A bekannte Lösung für die Bewässerung einer Fläche auf, nach welcher das Wasses über eine Regenkanone ausgebracht wird, die über einen von einer Haspel ablaufenden Schlauch gespeist wird. Aufgrund der Bindung an die Haspel ist mit beiden vorgenannten Lösungen ein vollständig flächendeckendes Überstreicher größerer Ausbringungsareale erschwert. Zudem ist es bei der Lösung nach der US-5,211,511 A erforderlich, sehr genau auf die Konsistenz des ausgebrachten Sediment-Wasser-Gemisches zu achten, damit sich die Hochruckdüsen nicht zusetzen.

Aufgabe der Erfindung ist es daher, eine alternative Lösung für die Restauration von Binnengewässern anzugeben, welche die vorstehend genannten Nachteile vermeidet und die Effizienz der Restaurationsmaßnahmen verbessert. Zudem sollen sich durch die Lösung die Restauration der Binnengewässer aufgrund eines einfachen Aufbaus auch aus betriebswirtschaftlicher Sicht gegenüber den bisher bekannten Maßnahmen des Standes der Technik vorteilhafter gestalten und die großflächige Ausbringung des Gemisches aus Wasser und Sediment erleichtern.

Dazu sind ein entsprechendes Verfahren und eine zur Durchführung des Verfahrens geeignete Anordnung anzugeben.

Die Aufgabe wird durch ein Verfahren mit den Merkmalen des Hauptanspruchs gelöst. Die zur Durchführung des Verfahrens geeignete Anordnung wird durch den ersten vorrichtungsbezogenen Anspruch charakterisiert. Vorteilhafte Ausbeziehungsweise Weiterbildungen der Erfindung sind durch die jeweiligen Unteransprüche gegeben.

Entsprechend dem vorgeschlagenen Verfahren zur Sanierung von Binnengewässern wird das Sediment vom Gewässerboden abgetragen, aus dem Gewässer herausbefördert und, wie aus dem Stand der Technik bekannt, zur Ausbringung auf landwirtschaftlich genutzte Flächen transportiert. Das Sediment wird dabei zusammen mit Wasser vom Gewässerboden aufgenommen und das mit dem Sediment befrachtete Wasser mittels wenigstens einer Pumpe über ein Rohrleitungssystem, mit Verteilern und Schieberanlagen, unmittelbar, das heißt, ohne Zwischenlagerung zu den für die Ausbringung vorgesehenen landwirtschaftlichen Nutzflächen transportiert. Dort wird das mit dem Sediment befrachtete Wasser, weiterhin ohne Zwischenlagerung, als nährstoffhaltiges Wasser verregnet.
Erfindungsgemäß wird das mit dem Sediment befrachtete Wasser über so genannte Ausbringungsrohre mit einer Mehrzahl von Auslassöffnungen verregnet, welche von Traktoren über die jeweilige landwirtschaftlich genutzte Ausbringungsfläche bewegt werden. Diese horizontal angeordneten Ausbringungsrohre sind vorzugsweise an der Hydraulikeinrichtung der Traktoren befestigten und über flexible Leitungen mit mindestens einer Transportleitung verbunden, über welche das Sediment mit dem Wasser von dem zu sanierenden Gewässer zu den landwirtschaftlichen Nutzflächen transportiert wird. In vorteilhafter Weise kann durch die Ausbringung mittels der durch die Traktoren bewegten Ausbringungsrohre ein vollständiges Überstreichen des jeweiligen Arials besser beziehungsweise leichter sichergestellt werden. Dabei ist es selbstverständlich möglich, über die von den Traktoren mitgeführten Ausbringungsrohre wechselweise nur Wasser oder Sediment mit Wasser auszubringen.
Gemäß einer Ausbildung der Erfindung wird das Sediment mittels eines Saugschneidkopfs aufgenommen und über mindestens eine mit dem Saugschneidkopf verbundene Rohrleitung zunächst an die Wasseroberfläche geführt sowie von dort über mindestens eine mit dieser Rohrleitung gekoppelte Transportleitung zu den landwirtschaftlichen Nutzflächen transportiert. Dabei wird das Ende der den Saugschneidkopf mit der Transportleitung verbindenden Rohrleitung zusammen mit dem Saugschneidkopf auf den Gewässergrund abgesenkt. Der Saugschneidkopf wird in vorbestimmter Tiefe auf dem Gewässergrund so positioniert, dass seine Saugöffnung die vollständige Abtragsbrust abdeckt. Hierdurch ist gewährleistet, dass ein hochkonzentrierter Feststoffanteil aufgenommen wird und im Umfeldbereich des Saugschneidkopfes nur eine äußerst geringe Verwirbelung des Sediments auftritt. Zur Behandlung des gesamten Gewässergrunds wird der Saugschneidkopf schrittweise versetzt, also jeweils neu positioniert. Um einen möglichst gleichmäßigen Abtrag des Sediments vom Gewässergrund zu gewährleisten, kann die Positionierung des Saugschneidkopfes durch ein GPS-System unterstützt werden.
Der Transport des Sediments beziehungsweise des mit dem Sediment befrachteten Wassers vom Gewässergrund zu den landwirtschaftlichen Nutzflächen vollzieht sich vorzugsweise so, dass das Gemisch aus Wasser und Sediment mittels der Saugpumpe des Saugschneidkopfes aufgenommen und von dieser unmittelbar in das dem weiteren Transport dienende Rohrleistungssystem gedrückt wird. Sofern größere Strecken mittels dieses Rohrleitungssystems beziehungsweise der Transportleitungen zu überbrücken sind, können darin noch weitere Pumpen angeordnet sein. Das Gemisch aus Sediment und Wasser wird entsprechend einer praxisgerechten Umsetzung der Erfindung über ein Hauptrohr transportiert und über mehrere von diesem abzweigende sowie abzuschiebernde Leitungsabgänge auf die einzelnen zur Ausbringung des Sediments vorgesehenen landwirtschaftlichen Nutzflächen verteilt.

Die zur Durchführung des vorgeschlagenen Verfahrens geeignete Anordnung umfasst ein Entnahmegerät, nämlich einen so genannten Spülbagger weitgehend konventioneller Bauart, welcher als ein auf einem Schiffskörper montierter Bagger ausgebildet ist, der mit einem auf den Gewässergrund abzusenkenden Saugschneidkopf und einer Saugpumpe ausgestattet ist. Wie sich dies im Grunde bereits aus der Bezeichnung ergibt, wird das Sediment mittels des Saugschneidkopfs in einer schneidartigen Bewegung vom Gewässergrund gelöst und das auf diese Weise gelockerte Sediment durch Absaugen aufgenommen. Dabei sind an dem Saugschneidkopf Leitbleche vorgesehen, mittels welcher das gelockerte Sediment einer Ansaugöffnung zugeführt wird. Mit dem Saugschneidkopf beziehungsweise dessen Ansaugöffnung ist ein Rohrleitungssystem verbunden, über welche das zusammen mit dem Wasser aufgenommene Sediment zu den Ausbringungsflächen transportiert wird. Bei dem Rohrleitungssystem handelt es sich um eine auf den Gewässergrund abgesenkte Dükerleitung, die an der Gewässeroberfläche mit wenigstens einer zum Ufer führenden Schwimmleitung gekoppelt und über diese mit mindestens einer Transportleitung, über welche das mit dem Sediment befrachtete Wasser weiter zu den landwirtschaftlichen Nutzflächen transportiert wird, verbunden ist. Der zum Transport des Sediments vom Gewässer zu den Ausbringungsflächen dienende Teil des Rohrleitungssystems besteht, wie bereits dargestellt, aus wenigstens einer Hauptleitung und vorzugsweise mehreren, von der Hauptleitung abzweigenden Leitungsabgängen.
Entsprechend einer praxisgerechten Ausführung der Erfindung besteht die Hauptleitung aus konventionellen Stahlspülrohren. In diese Stahlspülrohre sind entsprechende Steuer- und Schiebereinrichtungen eingeordnet, vermittels welcher die von der Hauptleitung abgehenden Leitungsabgänge zur Weiterleitung des nährstoffhaltigen Wassers geöffnet oder abgeschiebert werden können. Die vorgenannten Leitungsabgänge der Transportleitung beziehungsweise der Transportleitungen münden in flexible Leitungen, vorzugsweise PE-Rohre, welche an einen Verteilungskopf in Form eines Ausbringungsrohres mit mehreren Auslassöffnungen angekoppelt sind. Bei den Ausbringungsrohren handelt es sich um horizontale Rohrabschnitte aus Stahl, in welche voneinander beabstandet mehrere Auslassöffnungen eingebracht sind und welche jeweils an der Hydraulikeinrichtung eines landwirtschaftlichen Nutzfahrzeugs, vorzugsweise eines Traktors, befestigt sind. Durch die Verbindung mit den flexiblen PE-Rohren können die an den Traktoren montierten Ausbringungsrohre zur Überstreichung auch größerer Areale über die landwirtschaftlichen Nutzflächen geführt werden. Die Traktoren fahren dazu mit einer vorgegebenen Geschwindigkeit über die Ausbringungsflächen, wobei diese Geschwindigkeit in Abhängigkeit von der pro Flächenabschnitt auszubringenden Menge des Sediments und der Durchflussmenge des mit dem Sediment befrachteten nährstoffhaltigen Wassers festgelegt wird. Die Geschwindigkeit hängt insoweit gegebenenfalls auch von dem Abstand der zur Ausbringung des Sediments vorgesehenen landwirtschaftlichen Nutzfläche von dem zu sanierenden Gewässer beziehungsweise von der Pumpleistung der Saugpumpe des Spülbaggers und/oder der Anzahl gegebenenfalls weiterer zusätzlich in das Rohrleitungssystem eingebrachter Pumpen und deren Pumpleistung ab. Die flexiblen, mit den Ausbringungsrohren gekoppelten PE-Leitungen weisen vorzugsweise Durchmesser zwischen 100 und 200 mm auf.
Der Einsatz des erfindungsgemäßen Verfahrens und der zu dessen Umsetzung dienenden Anordnung gestaltet sich beispielsweise wie nachfolgend dargestellt. Als Entnahmegerät dient ein mit einem Saugschneidkopf ausgerüsteter Spülbagger. Zum Transport des Sediments vom Gewässergrund zur Gewässeroberfläche ist der Saugschneidkopf mit einer Dükerleitung verbunden, an welcher eine Saugpumpe angeordnet ist. Die Dükerleitung ist zum Weitertransport des zusammen mit Wasser aufgenommenen Sediments mit einer zum Ufer des Gewässers geführten Schwimmleitung und über diese mit dem mindestens einer Transportleitung verbunden, an welche, im Bereich der zur Verbringung des Sediments vorgesehenen Flächen, abschieberbare Abzweigleitungen angekoppelt sind. Die Abzweigleitungen münden schließlich in Vorrichtungen zur Verregnung des Gemisches aus Wasser und Sediment, wobei es sich entsprechend dem hier erläuterten Beispiel um Ausbringrohre handelt, welche von Traktoren über die jeweilige Fläche geführt werden und mit den Abzweigleitungen über flexible PE-Rohre verbunden sind.
Nach der Vorbereitung und Montage der Technik, insbesondere der Einrichtung des Saugschneidkopfes wird der Spülbagger über Fixier- und Positionierseile im Aushubbereich positioniert. Die Lage des Baggers kann über Seilwinden und die Seilverbindungen flexibel verändert werden, um den jeweiligen abzutragenden Flächenbereich abzudecken. Eine Positionskontrolle erfolgt vermittels einer im Bagger installierten oder von ihm mitgeführten GPS-Einrichtung, unterstützt durch eine bildliche Darstellung auf einem im Führerstand des Baggers angeordneten Bildschirm. Mit Hilfe der genannten Einrichtungen wird der Saugschneidkopf in die vorbestimmte Tiefe gebracht und hier so positioniert dass die Saugöffnung die vollständige Abtragsbrust abdeckt und dann das Sediment durch Inbetriebnahme der Saugpumpe aufgenommen. Die Saugpumpe des Baggers drückt das Sediment über die konventionellen Spülleitungen in die flexiblen Verteilerleitungen. Über diese Verteilerleitungen und Verteilungsköpfe beziehungsweise Ausbringungsrohre an den Traktoren wird gleichzeitig mit mehreren Traktoren das breiige Sediment auf den landwirtschaftlichen Nutzflächen ausgebracht.
In den Wachstumszeiten der Vegetation kann zusätzlich zu der Sedimentausbringung aus dem zu sanierenden Gewässer mit dem gleichen Bagger Wasser gefördert und durch das, ansonsten dem Transport des Sediments dienenden Teil des Rohrleitungssystem gepumpt sowie auf den Flächen verregnet werden.

## Patentansprüche

1. Verfahren zur Sanierung von Binnengewässern, durch Entnahme von Sediment, bei dem das Sediment vom Gewässerboden abgetragen, aus dem Gewässer herausbefördert und zur Ausbringung auf landwirtschaftlich genutzte Flächen transportiert wird, wobei das Sediment zusammen mit Wasser vom Gewässerboden aufgenommen, das mit dem Sediment befrachtete Wasser mittels wenigstens einer Pumpe über ein Rohrleitungssystem, mit Verteilern und Schieberanlagen unmittelbar sowie ohne Zwischenlagerung zu den zur Ausbringung vorgesehenen landwirtschaftlichen Nutzflächen transportiert und dort, weiterhin ohne Zwischenlagerung, als nährstoffhaltiges Wasser verregnet wird, **dadurch gekennzeichnet, dass**

2. Verfahren nach Anspruch 1, **dadurch gekennzeichnet, dass** das Sediment mittels eines Saugschneidkopfes aufgenommen, über mindestens eine mit dem Saugschneidkopf verbundene, auf den Gewässergrund abgesenkte Rohrleitung zunächst an die Wasseroberfläche geführt und von dort über mindestens eine mit dieser Rohrleitung gekoppelte Transportleitung zu den landwirtschaftlichen Nutzflächen transportiert wird.

3. Verfahren nach Anspruch 2, **dadurch gekennzeichnet, dass** der Saugschneidkopf unter Nutzung eines GPS-Systems auf dem Gewässerboden positioniert wird.

4. Verfahren nach Anspruch 2 oder 3, **dadurch gekennzeichnet, dass** das Wasser und das Sediment von einer Saugpumpe des Saugschneidkopfes über die mit diesem verbundene Rohrleitung in die bis zu den das mit dem Sediment befrachtete Wasser über mehrere zueinander beabstandete Auslassöffnungen von Ausbringungsrohren verregnet wird, welche mittels landwirtschaftlicher Fahrzeuge, wie Traktoren, über die jeweilige landwirtschaftlich genutzte Ausbringungsfläche geführt und dazu in horizontaler Anordnung an den genannten landwirtschaftlichen Fahrzeugen befestigt sowie über mindestens eine flexible Leitung mit dem das Gemisch aus Wasser und Sediment von dem Gewässer zu der jeweiligen Ausbringungsfläche transportierenden Rohrleitungssystem verbunden werden. landwirtschaftlichen Nutzflächen führende oder führenden Transportleitungen gedrückt werden.

5. Anordnung zur Sanierung von Binnengewässern, durch Aufnahme von Sediment vom Gewässerboden und dessen Verbringung auf vorbestimmte Ausbringungsflächen, mit einem Spülbagger zu Aufnahme des Sediments, Mitteln zur Ausbringung mit dem Sediment befrachteten Wassers auf den Ausbringungsflächen durch Verregnung und einem Rohrleitungssystem mit mindestens einer Pumpe, Verteilern und Schiebern, welches einen auf den Gewässergrund absenkbaren Saugschneidkopf mit des Spulbaggers den Mitteln zur Ausbringung verbindet, **dadurch gekennzeichnet, dass** es sich bei den Mitteln zur Verregnung des mit dem Sediment befrachteten Wassers um mindestens einen Verteilungskopf in Form eines in horizontaler Anordnung an einem landwirtschaftlichen Fahrzeug, wie einem Traktor, befestigten Ausbringungsrohres mit zweinander beabstandeten Auslassöffnungen handelt, wobei der Verteilungskopf über mindestens eine flexible Leitung mit dem das Gemisch aus Wasser und Sediment von dem Gewässer zu der jeweiligen Ausbringungsfläche transportierenden Rohrleitungssystem verbunden ist.

6. Anordnung nach Anspruch 5, **dadurch gekennzeichnet, dass** der Verteilungskopf an der Hydraulikeinheit eines Traktors montiert ist.

7. Anordnung nach Anspruch 5 oder 6, **dadurch gekennzeichnet, dass** der Spülbagger mit einem GPS-System zur Positionierung seines Saugschneidkopfes ausgestattet ist.

8. Anordnung nach einem der Ansprüche 5 bis 7, **dadurch gekennzeichnet, dass** es sich bei der das Ausbringungsrohr mit dem Rohrleitungssystem verbinden flexiblen Leitung um ein PE-Rohr handelt.

## Claims

1. Method for restoring internal waters, by removing sediment, in which the sediment is dredged from the bottom of the waters, conveyed out of the waters and transported for application to areas used for agriculture, wherein the sediment is taken up together with water from the bottom of the waters, the water loaded with the sediment is transported by means of at least one pump via a pipeline system with distributors and slide gate systems directly and without interim storage to the usable agricultural areas intended for application and there, also without interim storage, sprinkled as nutrient-containing water, **characterised in that** the water loaded with the sediment is sprinkled via a plurality of spaced discharge openings of application pipes which are carried by means of agricultural vehicles, such as tractors, over the respective application area used for agriculture and for this purpose fastened in a horizontal arrangement to the above-mentioned agricultural vehicles and connected via at least one flexible line to the pipeline system transporting the mixture of water and sediment from the waters to the respective application area.

2. Method according to Claim 1, **characterised in that** the sediment is taken up by means of a suction cutterhead, carried via at least one pipeline connected to the suction cutterhead and lowered onto the bottom of the waters firstly to the surface of the water and from here transported via at least one transport line coupled to this pipeline to the usable agricultural areas.

3. Method according to Claim 2, **characterised in that** the suction cutterhead is positioned on the bottom of the waters using a GPS.

4. Method according to Claim 2 or 3, **characterised in that** the water and the sediment are forced by a suction pump of the suction cutterhead via the pipeline connected to the latter into the transport lines leading up to the usable agricultural areas.

5. Arrangement for restoring internal waters, by taking up sediment from the bottom of the waters and bringing it to predetermined application areas, with a reclamation dredger for taking up the sediment, means for applying water loaded with the sediment to the application areas by sprinkling and a pipeline system with at least one pump, distributors and slide gates, which system connects a suction cutterhead, which can be set down on the bottom of the waters, of the reclamation dredger to the means for application, **characterised in that** the means for sprinkling the water loaded with the sediment consist of at least one distribution head in the form of an application pipe which is fastened in a horizontal arrangement to an agricultural vehicle, such as a tractor, and has a plurality of spaced discharge openings, wherein the distribution head is connected via at least one flexible line to the pipeline system transporting the mixture of water and sediment from the waters to the respective application area.

6. Arrangement according to Claim 5, **characterised in that** the distribution head is mounted on the hydraulic unit of a tractor.

7. Arrangement according to Claim 5 or 6, **characterised in that** the reclamation dredger is fitted with a GPS for positioning its suction cutterhead.

8. Arrangement according to any one of Claims 5 to 7, **characterised in that** the flexible line connecting the application pipe to the pipeline system is a PE pipe.

## Revendications

1. Procédé d'assainissement de plans d'eau intérieurs par enlèvement des sédiments, dans lequel les sédiments sont détachés du fond du plan d'eau, sont extraits du plan d'eau et sont transportés pour être épandus sur des surfaces utilisées en agriculture, les sédiments étant repris sur le fond du plan d'eau en même temps que de l'eau, l'eau chargée en sédiments étant transportée directement et sans entreposage intermédiaire au moyen d'au moins une pompe et par un système de conduits tubulaires doté de répartiteurs et de systèmes de vannes sur les surfaces agricoles prévues pour l'épandage, pour les arroser en tant qu'eau contenant des nutriments,
**caractérisé en ce que**
l'eau chargée en sédiments est épandue par plusieurs ouvertures de sortie, situées à distance les unes des autres, des tubes d'épandage qui sont placés au moyen des véhicules agricoles, par exemple de tracteurs, sur la surface d'épandage utilisée en agriculture et qui dans ce but sont fixés en position horizontale sur lesdits véhicules agricoles et sont reliés par au moins un conduit flexible au système de conduits tubulaires qui transportent le mélange d'eau et de sédiments entre le plan d'eau et la surface d'épandage concernée.

2. Procédé selon la revendication 1, **caractérisé en ce que** les sédiments sont repris au moyen d'une tête coupante-aspirante, amenés d'abord à la surface de l'eau par au moins un conduit tubulaire plongé au fond du plan d'eau et relié à la tête coupante-aspirante pour de là être transportés vers les surfaces agricoles d'utilisation par au moins un conduit de transport relié à ce conduit tubulaire.

3. Procédé selon la revendication 2, **caractérisé en ce que** la tête coupante-aspirante est posée sur le fond du plan d'eau en recourant à un système GPS.

4. Procédé selon les revendications 2 ou 3, **caractérisé en ce que** l'eau et les sédiments sont refoulés jusque dans les conduits de transport qui conduisent à la surface agricole utilisée par une pompe aspirante de la tête coupante-aspirante et par le conduit tubulaire qui y est relié.

5. Système d'assainissement de plans d'eau intérieurs par reprise des sédiments du fond du plan d'eau et amenée de ces sédiments sur des surfaces d'épandage prédéterminées, lequel système présente une drague de lavage qui reprend les sédiments, des moyens d'épandage par arrosage de l'eau chargée en sédiments sur les surfaces d'épandage et un système de conduits tubulaires qui présente au moins une pompe, des répartiteurs et des vannes et qui relie aux moyens d'épandage une tête coupante-aspirante, placée sur le fond du plan d'eau, de la drague de lavage,
**caractérisé en ce que**
les moyens d'arrosage de l'eau chargée en sédiments sont au moins une tête de répartition qui présente la forme d'un tube d'épandage qui présente plusieurs ouvertures de sortie situées à distance les unes des autres et disposées à l'horizontale sur un véhicule agricole, par exemple un tracteur, la tête de répartition étant reliée par au moins un conduit flexible au système de conduits tubulaires qui transporte le mélange d'eau et de sédiments du plan d'eau à la surface d'épandage concernée.

6. Système selon la revendication 5, **caractérisée en ce que** la tête de répartition est montée sur l'unité hydraulique d'un tracteur.

7. Système selon les revendications 5 ou 6, **caractérisé en ce que** la drague de lavage est équipée d'un système GPS de positionnement de sa tête coupante-aspirante.

8. Système selon l'une des revendications 5 à 7, **caractérisé en ce que** le conduit flexible qui relie le tube d'épandage au système de conduits tubulaires est un tube en PE.
